# EUROPÄISCHE PATENTANMELDUNG

(11) **EP 2 244 047 A1**
(43) Veröffentlichungstag der Anmeldung: **27.10.2010**
(21) Anmeldenummer: 09004552.7
(22) Anmeldetag: 30.03.2009
(51) Int. Cl.: F28D 20/00, B65D 90/08, F16J 15/06, F16J 15/10, F16J 15/12, F16L 23/18, F16L 23/22, F24H 1/18

(54) **Speicherbehälter und Ringscheibe zur Abdichtung einer Flanschverbindung**

(71) Anmelder: Isenmann, Hermann, 77790 Steinach/Baden (DE)
(72) Erfinder: Isenmann, Hermann, 77790 Steinach/Baden (DE)
(74) Vertreter: Geitz Truckenmüller Lucht

(57) **Zusammenfassung**

Es ist bekannt, Speicherbehälter für Flüssigkeiten, insbesondere Warmwasserspeicher für Wohnraumheizungen, zerlegbar auszugestalten, um auch einen nachträglichen Aus- und Einbau ausreichend großer Speicherbehälter trotz enger Zugangswege zu ermöglichen. Bekannte Dichtungsmechanismen sollen durch die Erfindung weiterentwickelt und verbessert werden.

Dies gelingt, indem zwischen zwei zur Verbindung untereinander mit Ringflanschen versehenen Gehäusesegmenten eine Ringscheibe zwischengelegt wird, welche beiderseits in Ringnuten eingelegte O-Ring-Dichtungen aufweist. Dies vereinfacht den Dichtungsaustausch und verbessert die Dichtungsqualität der Anordnung.

## Beschreibung

Die vorliegende Erfindung betrifft einen Speicherbehälter für Flüssigkeiten, mit einem aus wenigstens zwei Gehäusesegmenten schichtweise über Verbindungsränder zusammengesetzten Gehäuse, bei welchem den Verbindungsrändern beiderseits einer Verbindung zweier Gehäusesegmente jeweils ein Ringflansch zur gegenseitigen Verschraubung zugeordnet ist.

Ebenfalls betrifft die vorliegende Erfindung eine Ringscheibe zur Abdichtung einer solchen Ringflanschverbindung.

Ein derartiger Speicherbehälter für Flüssigkeiten ist bereits aus der deutschen Offenlegungsschrift DE 10 2004 005 829 A1 vorbekannt. Die fragliche Schrift betrifft einen Warmwasserspeicher, welcher aus einem mehrteiligen Kunststoffbehälter gefertigt ist. Hierbei weisen die Kunststoffbehälterteile in ihrem Randbereich jeweils einen Ringflansch auf, so dass durch ein Zusammensetzen der Behälterteile eine gegenseitige Verschraubung der beiden Ringflansche möglich wird. Zur Abdichtung ist in diesem Fall vorgesehen, dass im Bereich der einstückig angeformten Ringflansche eine umlaufende Nut in das Material eingegeben ist, in welche ein O-Ring als Dichtung eingelegt wird. Eine derartige O-Ring-Dichtung besteht üblicherweise aus einem Gummigemisch und füllt die fraglich Nut unter Abdichtung des Speicherbehälterinneren flüssigkeitsdicht auf.

Allerdings weist diese Konstruktion in der Praxis einige Probleme auf. So ist es beispielsweise zunächst umständlich und schwierig, die dünne und nachgiebige O-Ring-Dichtung in die hierfür vorgesehene Nut einzulegen und sodann den hierauf nachfolgenden Behälterabschnitt präzise so aufzusetzen, dass die O-Ring-Dichtung nicht aus der Nut herausspringt und teilweise in den Speicherbehälter hinein- oder aus dem Speicherbehälter herausragt. Auch kann es problematisch werden, bei einem Wartungsvorgang, in dessen Zusammenhang der Speicherbehälter geöffnet werden muss, die Nut von den Überresten der ausgedienten O-Ring-Dichtung zu befreien, um die Dichtigkeit mit einer neuen Dichtung wieder gewährleisten zu können.

Ein weiterer, ähnlicher Speicherbehälter für Flüssigkeiten kann der deutschen Offenlegungsschrift DE 10 2008 017 659 A1 entnommen werden. Der dort beschriebene Speicherbehälter ist in einzelnen Segmenten schichtweise aufgebaut, wobei die einzelnen Schichten mittels eines Nut-und-Feder-Stecksystems miteinander verbindbar sind und über eine Reihe von Spannschrauben aufeinander gedrückt werden. Hierbei sorgt ein Anschlag im Bereich der Außenwandung des Speicherbehälters für eine Begrenzung des Drucks auf die auch hier verwendete O-Ring-Dichtung. Diese Anordnung hat jedoch den Nachteil, dass auf Grund dieses Anschlags nicht abschließend sichergestellt ist, dass die Dichtung auch gleichmäßig angesichts der relativ großen Abmessungen eines derartigen Speicherbehälters unter Druck gerät, um ihre Dichtwirkung zu entfalten. Neben dem relativ hohen Aufwand für die Herstellung der Spannelemente und der Verbindungskonstruktion muss diese erforderliche extreme Genauigkeit in diesem Fall als Nachteil angesehen werden.

Grundsätzlich werden derartige Speicherbehälter hauptsächlich deshalb segmentweise aufgebaut, weil ein Aufbau auch im normalen Wohnbereich, d. h. etwa in Kellern von Wohnhäusern, erfolgen können soll. Es stellt bei der Konstruktion eines Wohnhauses kein Problem dar, vor dem Einziehen der Kellerdecke einen Speicherbehälter nahezu in Raumhöhe aufzustellen, jedoch ist es im Falle einer Renovierung häufig unmöglich, nahezu raumhohe Speicherbehälter in nennenswerter Breite innerhalb des Hauses zu manövrieren. Insofern war es bereits lange bekannt, die Behälter segmentweise anzuliefern und vor Ort zusammenzuschweißen, bevor die oben genannten Verfahren angewandt wurden.

Aufgabe der vorliegenden Erfindung ist es angesichts des vorstehend beschriebenen Standes der Technik, die im Stand der Technik immer noch bestehenden Nachteile zu beheben und einen Speicherbehälter zu schaffen, der sicher auf einfache Weise hergestellt werden kann und der auf einfache und komfortable Weise erneuert werden kann.

Gelöst wird diese Aufgabe durch einen Speicherbehälter für Flüssigkeiten gemäß den Merkmalen des Hauptanspruchs. Weitere sinnvolle Ausgestaltungen eines derartigen Speicherbehälters können den Unteransprüchen entnommen werden.

Erfindungsgemäß sieht ein derartiger Speicherbehälter für Flüssigkeiten vor, dass mehrere Gehäusesegmente schichtweise zusammengesetzt werden können. Dabei weist jedes dieser Gehäusesegmente im Bereich der mit dem benachbarten Gehäusesegment jeweils zu verbindenden Rand einen Ringflansch auf, der zur gegenseitigen Verschraubung der beiden einander benachbarten Gehäusesegmente dient. Die Ringflansche werden also paarweise aufeinander gelegt und über den beiden Ringflanschen deckungsgleich zugeordneten Bohrungen verschraubt. Zwischen den beiden Ringflanschen ist hierbei nach der Erfindung eine Ringscheibe eingelegt, welche ebenfalls deckungsgleich mit den Ringflanschen geschnitten ist. Auch weist sie die entsprechenden Bohrungen auf, um mit den Ringflanschen über deren Verschraubungen befestigt zu werden. Darüber hinaus weist die Ringscheibe auf beiden Flächen jeweils umlaufende Ringnuten auf, in welche O-Ring-Dichtungen zur Abdichtung der Verbindung Gehäuseelement - Ringscheibe - Gehäuseelement vorgesehen sind.

Auf diese Weise ist es möglich, die Gehäusesegmente einzeln zum Aufbauort zu verbringen und hiervon unabhängig die Ringscheibe zu transportieren. Über die Ringscheibe, welcher die O-Ring-Dichtungen fest zugeordnet sind, können diese mit sehr geringem Aufwand korrekt platziert werden, wobei die gemeinsame Verschraubung mit den Ringflanschen bereits für eine weitgehend genaue Positionierung der Ringscheibe und damit auch der Dichtungen sorgt. Im Fall einer Demontage des so entstehenden Speicherbehälters kann einfach die Ringscheibe ausgetauscht werden, so dass lediglich die glatten Ringflansche von eventuellen Rückständen der O-Ring-Dichtungen zu säubern sind. Im Gegensatz zum Säubern einer Nut ist ein derartiges flächiges Säubern ohne Weiteres in kürzester Zeit akkurat zu leisten.

Die Positionierung der Gehäusesegmente zueinander sowie der Ringscheibe wird dadurch noch verbessert, dass innerhalb einer Verbindung zweierlei Verbindungselemente unterschieden werden. In einem ersten Verbindungselement ist vorgesehen, dass der Ringflansch den Verbindungsrand des Gehäusesegments, welchem er zugeordnet ist, überragt, während in einem zweiten Verbindungselement der entsprechende Ringflansch gegenüber dem Verbindungsrand des Gehäusesegments zurückversetzt wird. Hierdurch kann der Verbindungsrand des zweitgenannten Gehäusesegments in den überragten Bereich des erstgenannten Ringflansches eingeschoben werden, so dass eine Überlappung des Materials erfolgt, mithin auch eine Zentrierung möglich ist. Zuvor ist hierbei, ebenfalls sehr leicht zu zentrieren, die Ringscheibe auf den zweiten Ringflansch aufzulegen, wobei durch das Zurückversetzen gegenüber dem Verbindungsrand auch hier ein Zentrierkonus für die Ringscheibe gebildet ist.

Eine zusätzliche Vereinfachung des Zusammensetzens der Gehäusesegmente wird zudem dadurch geleistet, dass der zweite Verbindungsrand zum Behälterinneren hin abgekröpft ist, so dass eine tatsächliche, zumindest ansatzweise konusförmige Ausgestaltung entsteht. Durch diese Abkröpfung hat der zweite Verbindungsrand im äußersten Bereich einen geringeren Durchmesser als der Innendurchmesser der Ringscheibe, so dass diese leicht aufgeschoben werden kann. Im Bereich des zweiten Ringflanschs weist der zweite Verbindungsrand sodann mithin seinen vollen Durchmesser auf.

Es ist erfindungsgemäß möglich, die Ringflansche an den Gehäusesegmenten anzuschweißen, wobei es in diesem Fall besonders vorteilhaft ist, wenn die Ringflansche im Querschnitt L-förmig gebildet sind. Dann wird eine Innenfläche des Flansches und eine Kontaktfläche zu unterscheiden sein, wobei die Innenfläche mit der Behälterwandung verbunden wird, während die Kontaktfläche zur Verschraubung mit einer Kontaktfläche eines anderen Ringflansches dient. In einer alternativen Ausgestaltung ist der Ringflansch einstückig mit dem Gehäusesegment aus Kunststoff hergestellt.

Es ist vorteilhaft, wenn die der Ringscheibe zugeordneten beidseitigen Ringnuten unterschiedliche Ringdurchmesser aufweisen, so dass sie nicht übereinander, sondern versetzt zueinander im Querschnitt der Ringscheibe angeordnet sind. Hierdurch wird die Ringscheibe durch die Nuten weniger geschwächt, so dass es möglich ist, ohne Verluste an Stabilität auch größere O-Ring-Dichtungen, also mit stärkerem Material, einzusetzen. Selbstverständlich sind die Ringnuten regelmäßig innerhalb der Verschraubungsbohrungen vorzusehen.

Es ist insbesondere vorgesehen, die Ringscheibe aus Polypropylen oder Polyethylen herzustellen, jedoch kann diese ohne Weiteres auch aus anderen Kunststoffen wie Polyvinylchlorid, aus Nichteisenmetallen oder auch aus Stahl hergestellt sein.

Eine derartige Ringscheibe kann neben dem Einsatz als Dichtung für Speicherbehälter auch für andere Flanschverbindungen, etwa Rohrverbindungen etc. eingesetzt werden. Sie ist nicht auf bestimmte Anwendungen beschränkt.

Neben der reinen Möglichkeit, auch große Speicherbehälter als Nachrüstbehälter bereitzustellen und diese somit segmentweise anzuliefern, kann die Segmentbauweise auch unter dem Gesichtspunkt von Vorteil sein, dass die Gehäusesegmente bereits mit im Rahmen des Warmwasserbetriebs erforderlichen Gerätschaften vorkonfektioniert sind. Auf diese Weise kann eine Vor-Ort-Installation beispielsweise von Schichtentnahmerohren bei Schichtwärmespeichern, Frischwasserstationen etc. entfallen und diese Elemente können innerhalb eines Baukastensystems zusammengesetzt werden.

Nachfolgend wird die vorstehend beschriebene Erfindung anhand eines Ausführungsbeispiels näher erläutert.

### Es zeigen

- Figur 1: einen Speicherbehälter aus drei Gehäusesegmenten in einer seitlichen Explosionsdarstellung,
- Figur 2: eine Ringscheibe zur Abdichtung der Gehäusesegmente in einer Draufsicht von oben,
- Figur 3: den Speicherbehälter gemäß Fig. 1 in einer seitlichen Draufsicht, und
- Figur 4: ein Detail des Speicherbehälters gemäß Fig. 3.

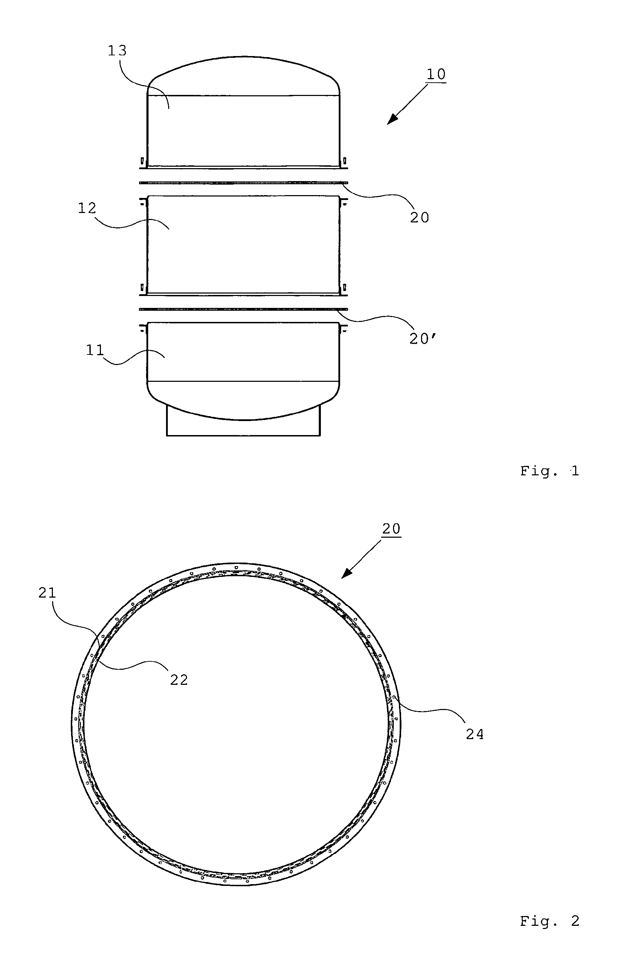

Fig. 1 zeigt in einer Explosionsdarstellung einen Speicherbehälter 10, welcher aus einem Bodensegment 11, einem Mittelsegment 12 und einem Deckelsegment 13 hergestellt ist. Sämtliche dieser Gehäusesegmente 11, 12, 13 weisen einander Verbindungsränder 32, 33 zu, welche jeweils zur Verbindung mit dem benachbarten Gehäuseelement 11, 12, 13 einen Ringflansch 30, 31 vorsehen. Jeweils zwei benachbarte Ringflansche 30, 31 werden unter Zwischenlage einer Ringscheibe 20, 20' miteinander verschraubt, wobei die Ringscheibe 20, 20' die beiden aufeinander treffenden Ringflansche 30, 31 unter Bildung eines abgedichteten Speicherbehälters 10 flüssigkeitsdicht verbinden.

Hierzu weist die in Fig. 2 dargestellte Ringscheibe 20 eine äußere Nut 21 auf ihrer Oberseite und eine innere Nut 22 auf ihrer Unterseite auf. Die beiden Nuten 21 und 22 sind auf Grund ihres unterschiedlichen Ringdurchmessers gegeneinander versetzt auf der Ringscheibe 20 angeordnet, um deren erhöhte Stabilität zu gewährleisten. Dadurch, dass die beiden Nuten 21 und 22 bereits mit O-Ring-Dichtungen 23, 23' vorkonfektioniert sind, ist es nicht erforderlich, vor Ort entsprechende O-Ring-Dichtungen 23, 23' den Gehäusesegmenten 11, 12, 13 direkt zuzuordnen. Dieser zeitaufwändige Arbeitsschritt kann dadurch entfallen. Ebenfalls ist hierdurch gewährleistet, dass bei einem Wiedereröffnen des Speicherbehälters 10 lediglich die Ringscheibe 20 entnommen werden muss und von den an sich glatten Ringflanschen 30, 31 die Rückstände der O-Ring-Dichtungen 23, 23' entfernt werden müssen. Dies ist angesichts der glatten Oberfläche der verwendeten Ringflansche 30, 31 ohne Weiteres möglich.

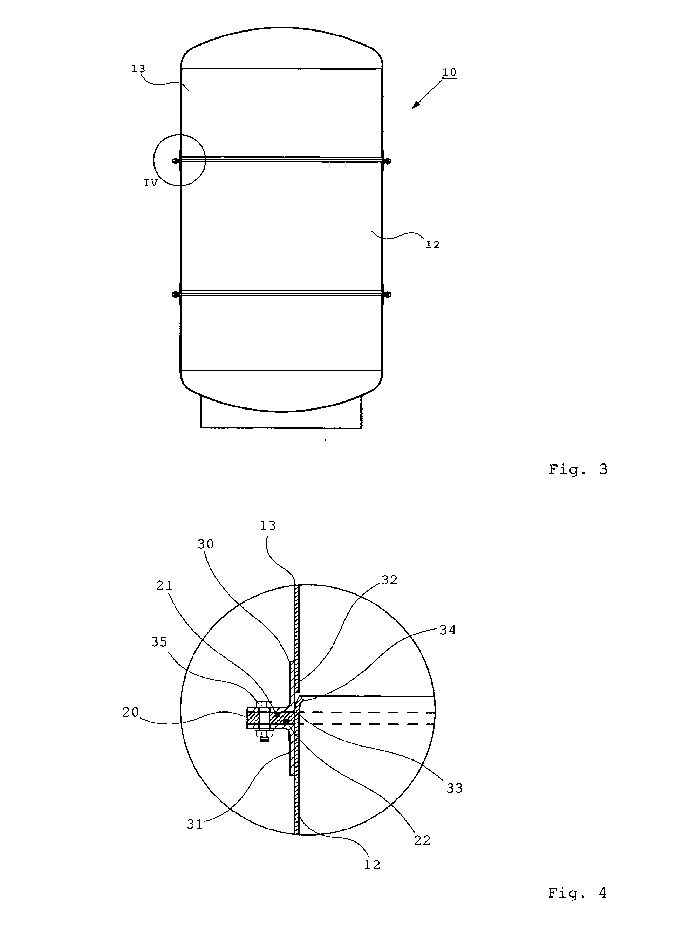

Fig. 3 zeigt den zusammengesetzten Speicherbehälter 10 in einer seitlichen Darstellung, wobei im Einzelnen ein Detail der Verbindung zwischen dem Mittelsegment 12 und dem Deckelsegment 13 von Interesse ist. Dieses Detail ist in Fig. 4 näher dargestellt.

Sowohl das Mittelsegment 12 als auch das Deckelsegment 13 weisen jeweils einen Ringflansch 30, 31 auf, wobei der erste Ringflansch 30 des Deckelsegments 13 gegenüber dem ersten Verbindungsrand 32 des Deckelsegments 13 derart vorversetzt ist, dass der erste Ringflansch 30 den fraglichen ersten Verbindungsrand 32 überragt. Gleichermaßen ist in Bezug auf das Mittelsegment 12 dessen zweiter Ringflansch 31 gegenüber dem zweiten Verbindungsrand 33 zurückversetzt. Hierdurch ist es möglich, dass das Mittelsegment 12 mit seinem zweiten Verbindungsrand 33 hinter den ersten Ringflansch 30 eingeschoben wird, wodurch bereits eine erste Zentrierung des Deckelsegments 13 gegenüber dem Mittelsegment 12 geleistet wird. Um die Einfädelung zu erleichtern, ist im Bereich des zweiten Verbindungsrandes 33 eine Abkröpfung 34 vorgesehen, wodurch eine Art Zentrierkonus für das Aufsetzen des Deckelsegments 13 auf das Mittelsegment 12 geschaffen ist. Zwischen dem ersten Ringflansch 30 und dem zweiten Ringflansch 31 ist eine Ringscheibe 20 zwischen gelegt, welche ebenfalls mit Vorteil durch den durch die Abkröpfung 34 geschaffenen Zentrierkonus vorzentriert ist. Die beiden in der äußeren und der inneren Nut 21, 22 aufgenommenen O-Ring-Dichtungen 23, 23' dichten hierbei die Ringflansche 30, 31 bzw. die mit diesen durch Schweißen verbundenen Gehäusesegmente 12, 13 nach innen ab und schaffen so einen abgedichteten Speicherbehälter 10. Die Konstruktion wird durch einen über den Umfang des Speicherbehälters 10 verteilten Kranz von Verschraubungen 35 zusammengehalten, wobei auf Grund des Einsatzes der Ringscheibe 20 es bei der Verschraubung nicht auf die eingesetzte Kraft ankommt, mithin durch ein zu starkes Anziehen der Verschraubung 35 eine Beschädigung der Dichtung nicht zu befürchten ist.

Vorstehend ist somit ein Speicherbehälter beschrieben, welcher die im Stand der Technik bekannten Speicherbehälter dadurch weiterentwickelt, dass eine Verbesserung und Vereinfachung der Abdichtung der einzelnen Gehäusesegmente untereinander geleistet wird. Dies erfolgt durch den Einsatz einer zwischen den verwendeten Ringflanschen eingelegten Ringscheibe, welche ihrerseits beiderseitig mit O-Ring-Dichtungen vorkonfektioniert ist.

### BEZUGSZEICHENLISTE

- 10: Speicherbehälter
- 11: Bodensegment
- 12: Mittelsegment
- 13: Deckelsegment
- 20,20': Ringscheibe
- 21: Äußere Nut
- 22: Innere Nut
- 23,23': O-Ring-Dichtung
- 24: Bohrungen
- 30: Erster Ringflansch
- 31: Zweiter Ringflansch
- 32: Erster Verbindungsrand
- 33: Zweiter Verbindungsrand
- 34: Abkröpfung
- 35: Verschraubung

## Patentansprüche

1. Speicherbehälter für Flüssigkeiten, mit einem aus wenigstens zwei Gehäusesegmenten (11,12,13) schichtweise über Verbindungsränder (32,33) zusammengesetzten Gehäuse, bei welchem den Verbindungsrändern (32,33) beiderseits einer Verbindung zweier Gehäusesegmente (11,12,13) jeweils ein Ringflansch (30,31) zur gegenseitigen Verschraubung zugeordnet ist,
**dadurch gekennzeichnet, dass** die Ringflansche (30,31) unter Zwischenlage einer Ringscheibe (20,20') verschraubt sind, welche beiderseits in umlaufende Ringnuten (21,22) eingelegte O-Ring-Dichtungen (23,23') aufweist.

2. Speicherbehälter gemäß Anspruch 1, **dadurch gekennzeichnet, dass** innerhalb einer Verbindung ein einem ersten Verbindungsrand (32) zugeordneter erster Ringflansch (30) diesen ersten Verbindungsrand (32) überragt und ein einem zweiten Verbindungsrand (33) zugeordneter zweiter Ringflansch (31) gegenüber diesem zweiten Verbindungsrand (33) zurückversetzt ist.

3. Speicherbehälter gemäß Anspruch 2, **dadurch gekennzeichnet, dass** der zweite Verbindungsrand (33) zum Behälterinneren hin abgekröpft ist.

4. Speicherbehälter gemäß einem der vorhergehenden Ansprüche, **dadurch gekennzeichnet, dass** die Ringflansche (30,31) an den Gehäusesegmenten (11,12,13) angeschweißt sind.

5. Speicherbehälter gemäß Anspruch 4, **dadurch gekennzeichnet, dass** die Ringflansche (30,31) im Querschnitt L-förmig sind.

6. Speicherbehälter gemäß einem der Ansprüche 1 bis 3,
**dadurch gekennzeichnet, dass** die Gehäusesegmente (11,12,13) mit den Ringflanschen (30,31) einstückig aus Kunststoff hergestellt sind.

7. Speicherbehälter gemäß einem der vorhergehenden Ansprüche, **dadurch gekennzeichnet, dass** die beidseits der Ringscheibe (20,20') angeordneten Ringnuten (21,22) unterschiedliche Ringdurchmesser aufweisen und innerhalb des Querschnitts der Ringscheibe (20,20') gegeneinander versetzt sind.

8. Speicherbehälter gemäß einem der vorhergehenden Ansprüche, **dadurch gekennzeichnet, dass** die Ringscheibe (20,20') aus Kunststoff, insbesondere Polypropylen, Polyethylen oder Polyvinylchlorid, oder aus Nichteisenmetallen oder aus Stahl hergestellt ist.

9. Speicherbehälter gemäß einem der vorhergehenden Ansprüche, **dadurch gekennzeichnet, dass** die Gehäusesegmente (11,12,13) mit vorkonfektionierten Prozesssteuerungsmitteln und/oder Bedienelementen vorbestückt sind.

10. Ringscheibe zur Zwischenlage in einer Verbindung zweier Ringflansche, welche beiderseits in umlaufende Ringnuten (21,22) eingelegte O-Ring-Dichtungen (23,23') aufweist.

11. Ringscheibe gemäß Anspruch 10, **dadurch gekennzeichnet, dass** die beidseits der Ringscheibe (20,20') angeordneten Ringnuten (21,22) unterschiedliche Ringdurchmesser aufweisen und innerhalb des Querschnitts der Ringscheibe (20,20') gegeneinander versetzt sind.

12. Ringscheibe gemäß einem der Ansprüche 10 oder 11,
**dadurch gekennzeichnet, dass** die Ringscheibe (20,20') aus Kunststoff, insbesondere Polypropylen, Polyethylen oder Polyvinylchlorid, oder aus Nichteisenmetallen oder aus Stahl hergestellt ist.

13. Ringscheibe gemäß einem der Ansprüche 10 bis 12,
**dadurch gekennzeichnet, dass** die Ringscheibe (20,20') einen die umlaufenden Ringnuten (21,22) umschließenden Kranz aus Bohrungen (24) zur Aufnahme der zur Verbindung der beiden Ringflansche (30,31) erforderlichen Verschraubungen (35) aufweist.
